# EUROPEAN PATENT APPLICATION

(11) **EP 2 728 765 A2**
(43) Date of publication of application: **07.05.2014**
(21) Application number: 13181329.7
(22) Date of filing: 22.08.2013
(51) Int. Cl.: H04B 3/44

(54) **Power feeding path switching device and power feeding system**

(30) Priority: 31.10.2012 JP 2012240848
(71) Applicant: FUJITSU LIMITED, Kawasaki-shi, Kanagawa 211-8588 (JP)
(72) Inventor: Agata, Masahiro, Kanagawa 211-8588 (JP)
(74) Representative: HOFFMANN EITLE

(57) **Abstract**

A power feeding path switching device includes a relay (RL1). The relay becomes excited when a power supply current flows across the relay in a first direction of a power feeding path, and becomes unexcited when a power supply current flows across the relay in a second direction opposite to the first direction, or when a power supply current does not flow across the relay. The relay in an unexcited state connects the power feeding path with ground, and the relay in an excited state does not connect the power feeding path with ground.

## Description

### FIELD

The embodiments discussed herein are related to a power feeding path switching device and a power feeding system.

### BACKGROUND

As an example of the related art, a submarine cable branching transmission path is known, in which, at least one branching transmission path is connected to and branched from a main transmission path that is a main submarine cable repeating transmission path. The branching transmission path is a submarine cable non-repeating transmission path that does not include a repeater in the path.

In a normal state, power feeding paths for the main transmission path are connected to one another, and are insulated from the ground. A power feeding path for the branching transmission path is connected to the ground at the branch point.

A direction of an electric current made to flow in the power feeding path for the branching transmission path causes one of power feeding paths for the main transmission path to be selectively connected to the ground, and connection of another power feeding paths for the main transmission path is switched to the power feeding path for the branching transmission path. This state is maintained. Then, in this switched state, an electric current is made to flow in the branching transmission path in a direction different from the direction at the time of switching. Thereby, the normal state is recovered.

Known as the related art is a power feeding method for a submarine cable system. This submarine cable system includes a first and a second terminal stations that include power feeding devices for the submarine cable system, a plurality of submarine repeaters that are connected in series between these terminal stations, N branching units grounded at arbitrary positions between the submarine repeaters, and submarine cables that do not include submarine repeaters and that connect respective undersea branching devices to third to the (N+2)-th terminal stations. The third to the (N+2)-th terminal stations include switches that respectively enable setting of power feeding paths for the submarine cable system.

Since a distance between a branch device and a branch station is relatively short, non-repeating transmission is performed in this section in many cases. In other words, a repeater is unnecessary between the branch device and the branch station, and power feeding from the branch station to the power feeding path is thereby unnecessary.

However, in the above-described related prior art, at the time of recovering power feeding in the power feeding path for the main transmission path, electric power is supplied from the branch station to the power feeding path for the branching transmission path. For this reason, a power feeding device is installed also in the branch station.

In the related art, there have been proposed various kinds of power feeding path switching devices and power feeding system.
Patent Document 1: Japanese Laid-open Patent Publication No. H01-220531
Patent Document 2: Japanese Laid-open Utility Model Publication No. H04-036339

Accordingly, it is an object of one aspect of the embodiment to provide a device or a system enabling to eliminate necessity of power feeding from a branch station to a power feeding path for a branching transmission path, to recover power feeding.

### SUMMARY

According to an aspect of the embodiments, a power feeding path switching device includes a relay. The relay becomes excited when a power supply current flows across the relay in a first direction of a power feeding path, and becomes unexcited when a power supply current flows across the relay in a second direction opposite to the first direction, or when a power supply current does not flow across the relay.

The relay in an unexcited state connects the power feeding path with ground, and the relay in an excited state does not connect the power feeding path with ground.

### BRIEF DESCRIPTION OF DRAWING

FIG. 1 is a schematic illustration of a submarine cable system;
FIG. 2 illustrates a configuration example of the submarine cable system;
FIG. 3 illustrates a configuration of a first example of an undersea branching device;
FIG. 4A, FIG. 4B, and FIG. 4C illustrate one example of operation of the undersea branching device in FIG. 3;
FIG. 5 illustrates a configuration of a second example of the undersea branching device;
FIG. 6A and FIG. 6B illustrate one example of operation of the undersea branching device in FIG. 5 at the time of system start-up;
FIG. 7 illustrates one example of operation of the undersea branching device in FIG. 5 at the time of system start-up;
FIG. 8A and FIG. 8B illustrate one example of operation of the undersea branching device in FIG. 5 when a failure occurs;
FIG. 9A and FIG. 9B illustrate one example of operation of the undersea branching device in FIG. 5 when a failure occurs;
FIG. 10A and FIG. 10B illustrate one example of operation of the undersea branching device in FIG. 5 when a failure occurs;
FIG. 11 illustrates a configuration of a third example of the undersea branching device;
FIG. 12A and FIG. 12B illustrate one example of operation of the undersea branching device in FIG. 11 when a failure occurs;
FIG. 13A and FIG. 13B illustrate one example of operation of the undersea branching device in FIG. 11 when a failure occurs;
FIG. 14 illustrates one example of operation of the undersea branching device in FIG. 11 when a failure occurs;
FIG. 15 illustrates a configuration of a fourth example of the undersea branching device;
FIG. 16A and FIG. 16B illustrate one example of operation of the undersea branching device in FIG. 15 when a failure occurs; and
FIG. 17A and FIG. 17B illustrate one example of operation of the undersea branching device in FIG. 15 when a failure occurs.

### DESCRIPTION OF EMBODIMENTS

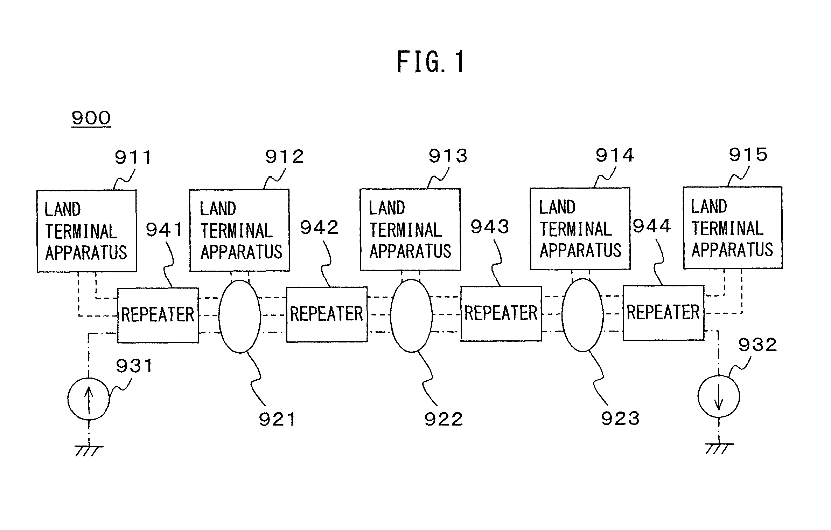

First, before describing embodiments of a power feeding path switching device and a power feeding system in detail, description will be made for a submarine cable system with reference to FIG. 1.

FIG. 1 is a schematic illustration of a submarine cable system 900. A power feeding path depicted by the dashed-dotted line is provided between land terminal apparatuses 911 and 915. The reference symbols 931 and 932 represent power feeding devices which cause a power supply current to flow in the power feeding path. This power feeding path supplies electric power to repeaters 941 to 944 in a communication line depicted by the dashed line.

At the communication line, branching units 921 to 923 are provided in order to enable a signal to be transmitted to land terminal apparatuses 912 to 914 that are connected to communication lines branched from a communication line path extending from the land terminal apparatus 911 to the land terminal apparatus 915. In some parts in the following description, the term "branch station" is used for expressing a land terminal apparatus that is connected to a communication line branched from the communication line as in the case of the land terminal apparatuses 912 to 914.

When a cable open failure occurs in the power feeding path, electric power is not supplied to the repeaters 941 to 944. Accordingly, the repeaters 941 to 944 do not operate, causing a signal unable to be transmitted to all of the branch stations. The term "cable open failure" is a failure that the power feeding line is not grounded to seawater. The term "cable shunt failure" is a failure that the power feeding line is grounded to seawater.

In the following, a power feeding path switching device and a power feeding system of the present embodiment is described with reference to the attached drawings.

### <1. First Embodiment>

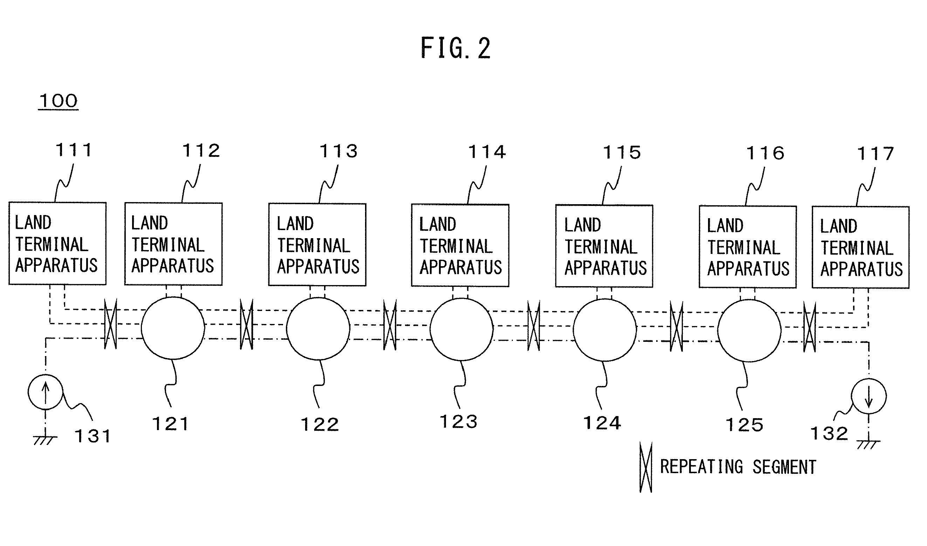

FIG. 2 illustrates a configuration example of a submarine cable system to which one example of the power feeding system has been applied. The submarine cable system 100 includes land terminal apparatuses 111 to 117, undersea branching devices 121 to 125, and power feeding devices 131 and 132. In the attached drawings described in the following, the dashed line indicates a communication circuit, and the dashed-dotted line indicates a power feeding path.

Each of the undersea branching devices 121 to 125 is one example of the power feeding path switching device. The following describes exemplification of the power feeding system that supplies electric power to repeaters provided between the land terminal apparatuses in the submarine cable system. However, this exemplification is not described with the intention that application of the power feeding system described in the present specification is limited only to an undersea cable system. The power feeding system described in the present specification is applicable to power feeding in systems used for various purposes.

A segment between the land terminal apparatus 111 and the undersea branching device 121, a segment between the undersea branching devices 121 and 122, and a segment between the undersea branching devices 122 and 123 are repeating segments each of which a repeater is provided therebetween. Likewise, a segment between the undersea branching devices 123 and 124, a segment between the undersea branching devices 124 and 125, and a segment between the undersea branching device 125 and the land terminal apparatus 117 are repeating segments as well.

The undersea branching devices 121 to 125 branches the main communication line, the main communication line connecting the land terminal apparatus 111 and the land terminal apparatus 117 to each other. The land terminal apparatuses 112 to 116 are branch stations connected to branch communication lines that are branched from the main communication line by the undersea branching devices 121 to 125, respectively. In the present embodiment, the communication lines may be an optical fiber, for example, and each of the undersea branching devices 121 to 125 may include an optical add-drop multiplexer (OADM device) that separates or multiplexes an optical signal traveling in the communication line. In a changed example, the communication lines may be transmission media other than an optical fiber.

In the present embodiment, the branch communication lines that respectively connect the undersea branching devices 121 to 125 with the land terminal apparatuses 112 to 116 may be non- repeating segments that do not include a repeater therebetween. In a modified example, a part of or all of these branch communication lines may be repeating segments.

Between the land terminal apparatuses 111 and 117, the power feeding line is provided. The power feeding devices 131 and 132 causes a power supply current to flow in the power feeding line by the both ends of the power feeding line. It is assumed that in a normal operating state, a direction of a power supply current is a direction toward the land terminal apparatus 117 from the land terminal apparatus 111. The electric power is supplied through the power feeding path to the repeaters 941 to 944 that are provided in the main communication line between the land terminal apparatuses 111 and 117.

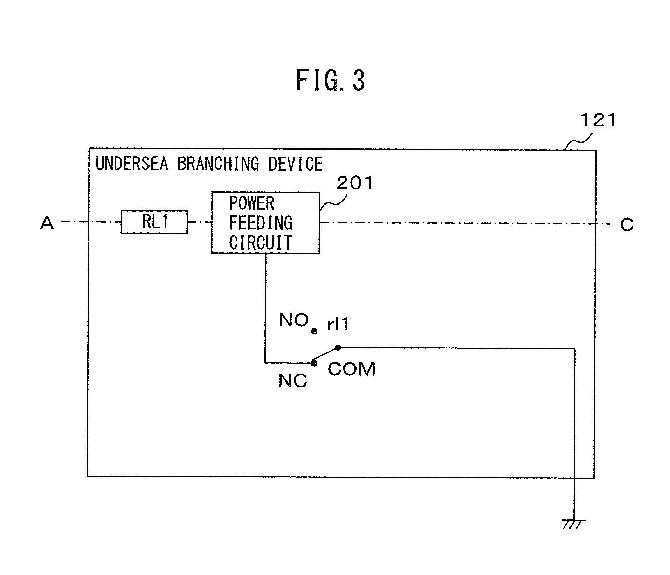

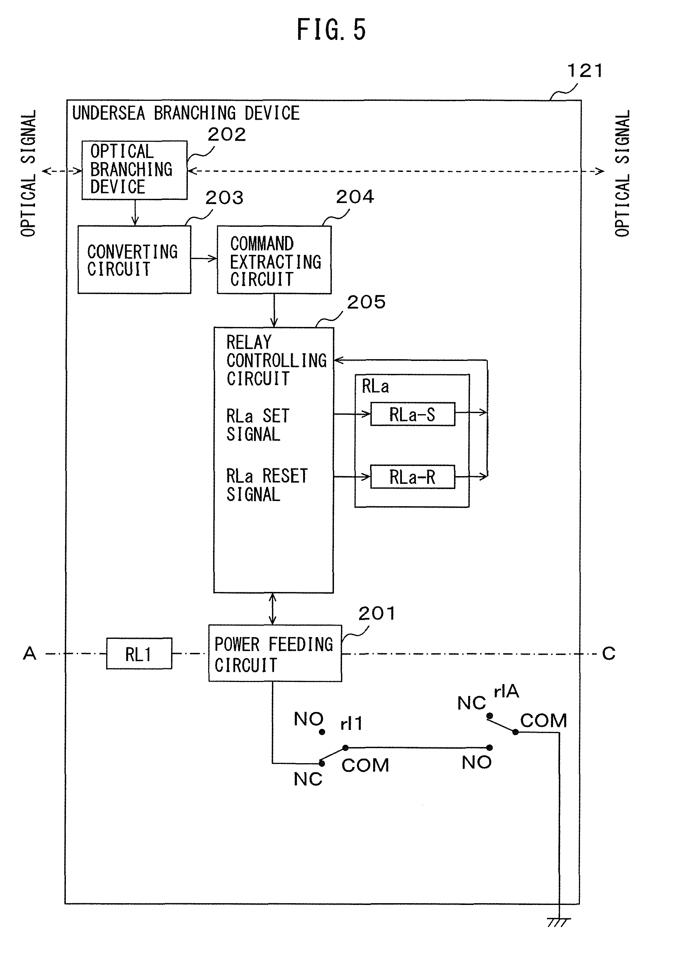

FIG. 3 illustrates a configuration of a first example of the undersea branching device 121. The undersea branching devices 122 to 125 may have the same configuration as the undersea branching device 121. The functional configuration of FIG. 3 mainly illustrates the configuration related to a function of the undersea branching device 121 described in the present specification. The undersea branching device 121 may include constituting elements other than the constituting elements illustrated in the drawing. This description also applies to a configuration illustrated in FIG. 5, FIG. 11, and FIG. 15.

The undersea branching device 121 includes a relay RL1 and a power feeding circuit 201. The power feeding circuit 201 receives electric power from a power feeding path, and supplies the electric power to each circuit in the undersea branching device 121. The relay RL1 is an electric relay connected in series between the power feeding path on the side of the land terminal apparatus 111 and the power feeding circuit 201. The reference symbol rl1 designates contact points of the relay RL1. When a coil of the relay RL1 is not excited, an NC terminal and a COM terminal are connected to each other. When a coil of the relay RL1 is excited, an NO terminal and the COM terminal are connected to each other. The COM terminal of the relay RL1 is grounded under the sea. The NC terminal is connected to the power feeding path via the power feeding circuit 201.

The relay RL1 is an electric relay that has a directional characteristic. In other words, when an electric current flows in either one of the direction in the power feeding path connected in series to the relay RL1, the coil is excited, and when an electric current flows in the opposite direction, the coil is not excited. In the present embodiment, when a power supply current flows from the reference mark A to the reference mark C in the drawing, the coil is excited. The reference mark A is a power feeding path between the undersea branching device 121 and the land terminal apparatus 111, for example. The reference mark C is a power feeding path between the undersea branching devices 121 and 122. On the other hand, when a power supply current does not flow from the reference mark A to the reference mark C, or when a power supply current flows from the reference mark C to the reference mark A in the drawing, the coil is not excited.

When a power supply current flows in the direction from the land terminal apparatus 111 to the land terminal apparatus 117 in a normal operational state, the coil of the relay RL1 is excited to connect the NO terminal to the COM terminal. For this reason, the power feeding path is not grounded at the contact points rl1 of the relay RL1.

When a cable open failure occurs in the power feeding path, the power feeding devices 131 and 132 stop power feeding. As a result, a power supply current is stopped, so that the coil of the relay RL1 becomes unexcited. Accordingly, the NC terminal is connected to the COM terminal to connect the power feeding path to the ground via the contact points rl1.

Then, the power feeding devices 131 and 132 reverse the polarity to restart power feeding. The coil of the relay RL1 is not excited because of the directional characteristic, so that connection of the power feeding path to the ground via the contact points rl1 is maintained. Accordingly, a power supply current is allowed to flow in the segment between the undersea branching device 121 connected to the ground and the land terminal apparatus 111. Likewise, a power supply current flows in the segment between the undersea branching device 125 and the land terminal apparatus 117. As a result, in these segments, a power supply current is supplied again to the repeaters, and in a part of the segments, signal is allowed to be transmitted again.

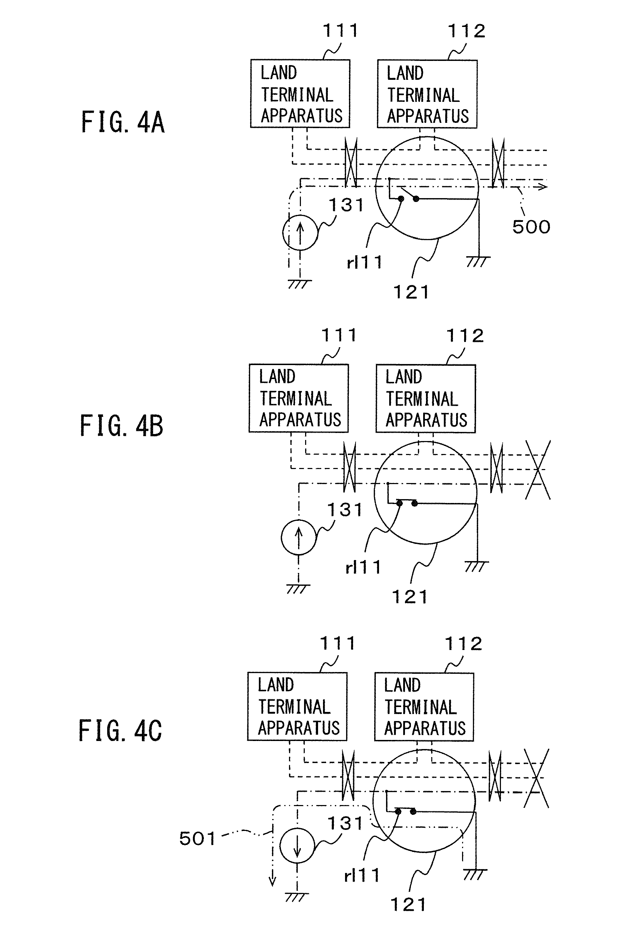

FIG. 4A, FIG. 4B, and FIG. 4C illustrate one example of operation of the undersea branching device 121. The contact points rl11 in the drawings indicate a connection state between the NC terminal and the COM terminal. In a normal operation state in FIG. 4A, a power supply current 500 is made to flow in the direction from the land terminal apparatus 111 to the land terminal apparatus 117. Since the coil of the relay RL1 is excited, the power feeding path is not connected to the ground via the contact points rl1.

In FIG. 4B, a cable open failure occurs in the power feeding path. Accordingly, the power feeding devices 131 and 132 stop power feeding, so that the coil of the relay RL1 is not excited. As a result, the NC terminal is connected with the COM terminal, so that the power feeding path is connected to the ground via the contact points rl1.

In FIG. 4C, the power feeding devices 131 and 132 reverse the polarity to restart power feeding. Accordingly, the coil of the relay RL1 is not excited, so that connection of the power feeding path to the ground is maintained. For this reason, a power supply current 501 is allowed to flow in the segment between the undersea branching device 121 connected to the ground and the land terminal apparatus 111.

According to the present embodiment, even when a power supply current is stopped due to a cable open failure, the undersea branching device makes it possible for the power feeding path to be connected to the ground. For this reason, it is possible to secure a power feeding route between the land terminal apparatus and the undersea ground. Further, even without power feeding from the branch station to the power feeding path for the branch transmission path, the power feeding path is able to be restored.

### <2. Second Embodiment>

FIG. 5 illustrates a configuration of a second example of the undersea branching device 121. The same reference symbols as the reference symbols used in FIG. 3 are attached to the same constituting elements as the constituting elements illustrated in FIG. 3, and description about the same functions is omitted. The undersea branching device 121 includes an optical branching device 202, a converting circuit 203, a command extracting circuit 204, a relay controlling circuit 205, and a latch relay RLa.

The optical branching device 202 branches an optical signal traveling in the communication line. The converting circuit 203 converts, into an electric signal, the optical signal branched by the optical branching device 202. The command extracting circuit 204 extracts, from the electric signal, a command signal for the undersea branching device 121. This command signal includes an RLa set signal for setting the latch relay RLa, and an RLa reset signal for resetting the latch relay RLa.

When the relay controlling circuit 205 receives the RLa set signal from the command extracting circuit 204, the relay controlling circuit 205 outputs a pulse signal to a relay coil RLa-S for setting the latch relay RLa, to set the latch relay RLa. When the relay controlling circuit 205 receives the RLa reset signal from the command extracting circuit 204, the relay controlling circuit 205 outputs a pulse signal to a relay coil RLa-R for resetting the latch relay RLa, to reset the latch relay RLa.

The latch relay RLa controls opening and closing of connection between the power feeding path and the ground, this connection being made via the contact points rl1 of the relay RL1. The latch relay RLa opens the connection between the power feeding path and the ground regardless of whether the relay RLa is excited or not. The symbol rlA represents contact points of the latch relay RLa. The latch relay RLa is set so that the NO terminal is connected with the COM terminal. The latch relay RLa is reset so that the NC terminal is connected with the COM terminal. The NO terminal at the contact points rlA is connected to the COM terminal at the contact points rl1. The COM terminal at the contact points rlA is grounded under the sea.

In an initial state of the submarine cable system 100, i.e., before a power supply current flows in the power feeding path, the latch relay RLa is reset. For this reason, even when the NC terminal and the COM terminal at the contact points rl1 are connected to each other before power feeding, the power feeding path is not connected to the ground since the NO terminal and the COM terminal at the contact points rlA are not connected to each other. The same description applies to the other undersea branching devices 122 to 125. Accordingly, at the time of starting power feeding, at each of the undersea branching devices 121 to 125, the power feeding path is not connected to the ground, so that the power feeding devices 131 and 132 are able to start both-end power feeding.

Then, the power supply current flows in the power feeding path to excite the coil of the relay RL1. Thereby, the NO terminal and the COM terminal at the contact points rl1 are connected to each other, and disconnection is made between the NC terminal and the COM terminal at the contact points rl1. Then, when a value of the power supply current increases to a rated current value, the relay controlling circuit 205 starts to operate. When the land terminal apparatus 111 transmits, to the undersea branching devices 121 to 125, the RLa set signal by means of an optical signal, the latch relays RLa are set. Thereby, at each of the undersea branching devices 121 to 125, the NO terminal and the COM terminal at the contact points rlA are connected to each other.

When a cable open failure occurs to stop power feeding, the coil of the relay RL1 becomes unexcited. Thereby, the NC terminal and the COM terminal at the contact points rl1 are connected to each other. Meanwhile, the latch relay RLa is maintained to be set so that the NO terminal stays to be connected with the COM terminal at the contact points rlA. Accordingly, at all of the undersea branching devices 121 to 125, the power feeding path is connected to the ground.

Then, the power feeding devices 131 and 132 reverse the polarity to restart power feeding. Thereby, it is possible for a power supply current to flow in the segment between the undersea branching device 121 and the land terminal apparatus 111. Restarting power feeding between the undersea branching device 121 and the land terminal apparatus 111 causes the relay controlling circuit 205 of the undersea branching device 121 to operate.

When there is no cable open failure between the undersea branching devices 121 and 122, the land terminal apparatus 111 transmits the RLa reset signal to the undersea branching device 121, by means of an optical signal. The latch relay RLa of the undersea branching device 121 is reset so that disconnection is made between the NO terminal and the COM terminal at the contact points rlA. Thereby, the power feeding path becomes disconnected from the ground at the undersea branching device 121.

The power feeding path is connected to the ground at the neighboring undersea branching device 122, so that a power supply current is supplied to the undersea branching device 122. Thus, resetting the latch relay RLa of the undersea branching device 121 causes a power supply current 501 to flow also in the segment between the undersea branching devices 121 and 122.

Likewise, when there is no cable open failure between the undersea branching devices 122 and 123, the relay controlling circuit 205 of the undersea branching device 122 is made to operate, and the land terminal apparatus 111 then resets the latch relay RLa of the undersea branching device 122.

Thus, in the order of the undersea branching devices 121, 122 ... nearer from the land terminal apparatus 111 at the one end of the main communication line, the latch relays RLa of the respective undersea branching devices are reset. Likewise, in the order of the undersea branching devices 125, 124... nearer from the land terminal apparatus 117 at the other end of the main communication line, the latch relays RLa of the respective undersea branching devices are reset. In this manner, the power feeding path in the segments excluding the failure occurring segment is able to be restored. To the undersea branching devices 125, 124 ... near from the land terminal apparatus 117, the land terminal apparatus 117 may transmit the command signal.

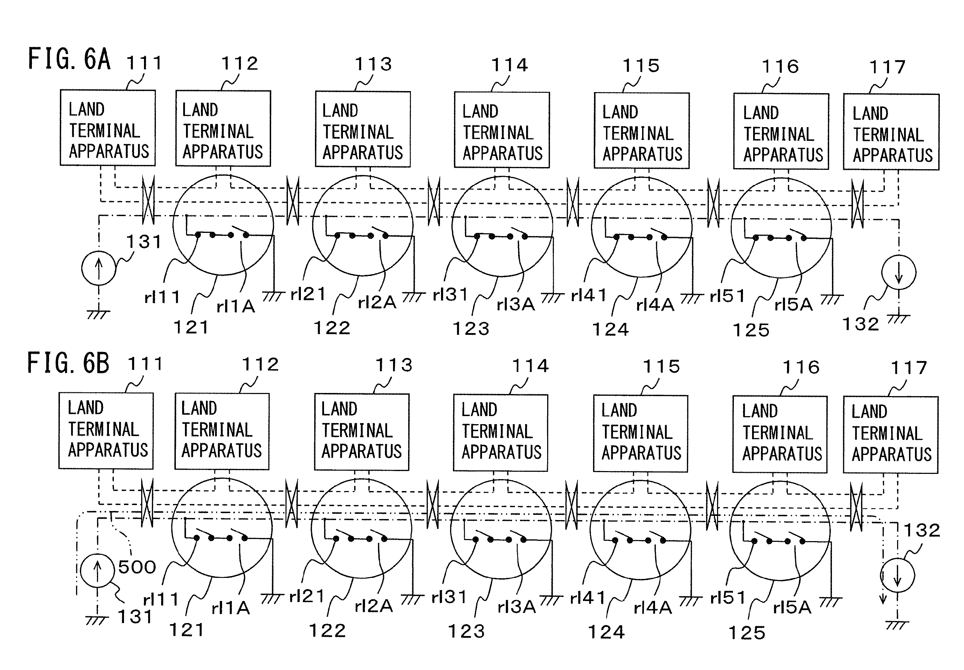

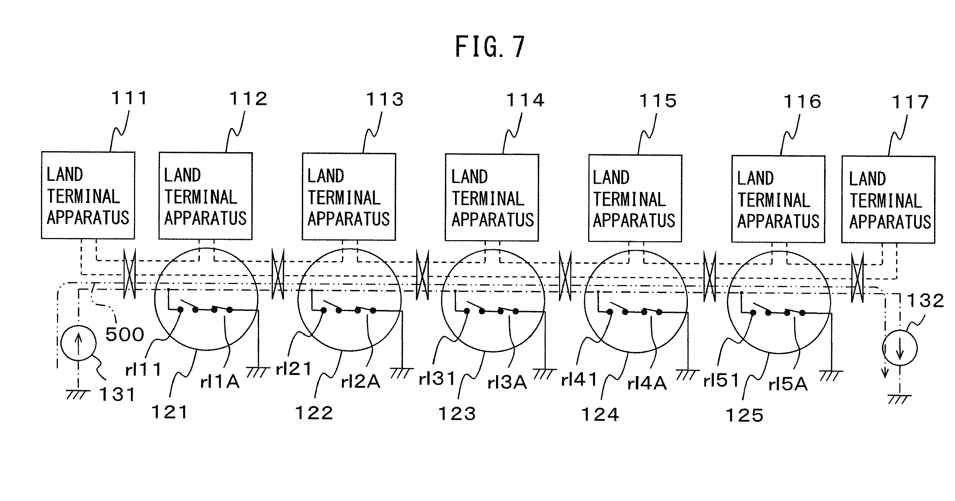

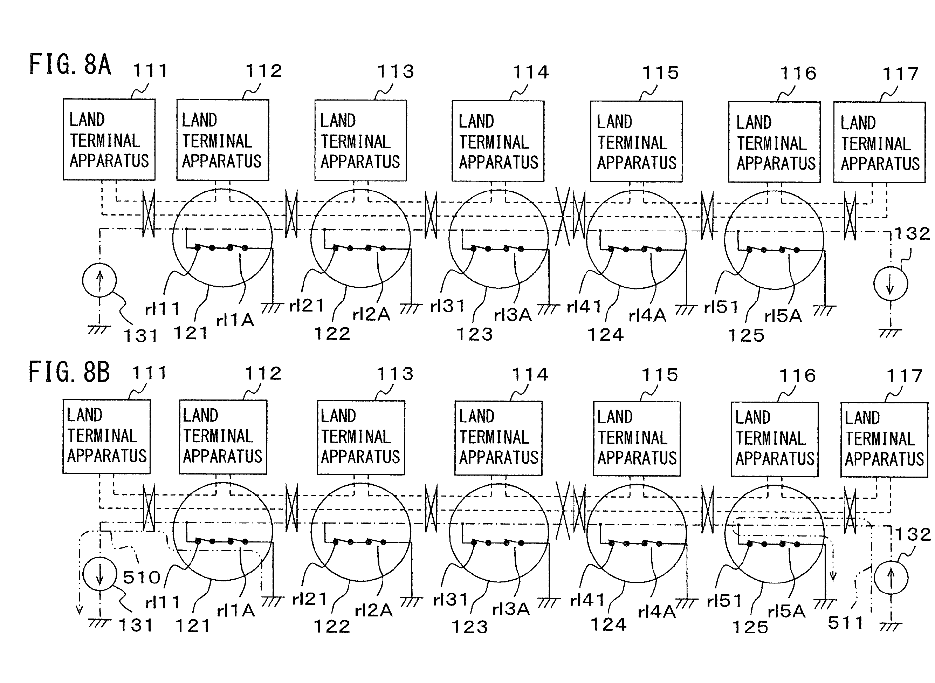

FIG. 6A, FIG. 6B, and FIG. 7 illustrate one example of operation of the undersea branching devices 121 to 125 in FIG. 5 at the time of system start-up. In FIG. 6A, FIG. 6B, and FIG. 7, the contact points rl11 to rl51 each indicate a connection state between the NC terminal and the COM terminal at the contact points rl1 of the corresponding one of the undersea branching devices 121 to 125. The contact points rl1A to rl5A each indicate a connection state between the NO terminal and the COM terminal at the contact points rlA of the corresponding one of the undersea branching devices 121 to 125. The same description applies to FIG. 8A, FIG. 8B, FIG. 9A, FIG. 9B, FIG. 10A, and FIG. 10B.

FIG. 6A illustrates an initial state of the submarine cable system 100. The contact points rl11 to rl51 are closed before a power supply current flows in the power feeding path. Meanwhile, the latch relays RLa of the undersea branching devices 121 to 125 are reset, and the contact points rl1A to rl5A are opened. Accordingly, the power feeding path is not connected to the ground at the undersea branching devices 121 to 125, and it is possible for the power feeding devices 131 and 132 supply to start both-end power feeding.

When a power supply current 500 flows in the power feeding path as illustrated in FIG. 6B, the contact points rl11 to rl51 are opened. When a value of the power supply current 500 increases to reach a rated current value, the relay controlling circuits 205 of the undersea branching devices 121 to 125 are made to operate to enable the command signal to be received.

The RLa set signal is transmitted from one of the land terminal apparatuses 111 to 117 to the undersea branching devices 121 to 125. At the respective undersea branching devices 121 to 125, the contact points rl1A to rl5A are closed to be the normal operation state illustrated in FIG. 7.

FIG. 8A, FIG. 8B, FIG. 9A, FIG. 9B, FIG. 10A, and FIG. 10B illustrate one example of operation of the undersea branching devices 121 to 125 in FIG. 5 when a failure occurs. It is assumed that a cable open failure occurs between the undersea branching devices 123 and 124. This state is illustrated in FIG. 8A.

The failure occurrence causes the power feeding devices 131 and 132 to stop power feeding. As a result, the contact points rl11 to rl51 are closed. Meanwhile, the contact points rl1A to rl5A are maintained to be closed. For this reason, at all of the undersea branching devices 121 to 125, the power feeding path is connected to the ground.

Then, the power feeding devices 131 and 132 reverse the polarity to restart power feeding. This state is illustrated in FIG. 8B. Since the power feeding path is connected to the ground at the undersea branching device 121, a power supply current 510 is allowed to flow in the segment between the undersea branching device 121 and the land terminal apparatus 111. Likewise, a power supply current 511 is allowed to flow in the segment between the undersea branching device 125 and the land terminal apparatus 117.

Restarting power feeding causes the repeaters to operate in these segments so that an optical signal is communicated between the land terminal apparatuses 111 and 112, and between the land terminal apparatuses 116 and 117. Further, the relay controlling circuits 205 of the undersea branching devices 121 and 125 are made to operate.

The land terminal apparatuses 111 and 117 determine whether or not rated currents flow in the respective undersea branching devices 121 and 125, and the relay controlling circuits 205 are thereby operating. For example, the land terminal apparatuses 111 and 117 may determine whether or not the rated currents are flowing in the undersea branching devices 121 and 125, in accordance with an electric potential difference between the ground and the power feeding line on the side of the power feeding device 131, and an electric potential difference between the ground and the power feeding line on the side of the power feeding device 132. For example, when an electric potential difference between the ground and the power feeding line on the side of the power feeding device 131, and an electric potential difference between the ground and the power feeding line on the side of the power feeding device 132 are equal to or larger than a threshold, the land terminal apparatuses 111 and 117 determine that the rated currents are flowing in the undersea branching devices 121 and 125. On the other hand, the electric potential differences are lower than the threshold, the land terminal apparatuses 111 and 117 determine that the rated currents are not flowing.

Further, the land terminal apparatuses 111 and 117 may determine whether or not the rated currents are flowing, on the basis of whether the undersea branching devices 121 and 125 or the relay controlling circuits 205 transmit predetermined response signals or not.

When the rated current is flowing in the undersea branching device 121, the land terminal apparatus 111 transmits the RLa reset signal to the undersea branching device 121. When the rated current is flowing in the undersea branching device 125, the land terminal apparatus 117 transmits the RLa reset signal to the undersea branching device 125. In a changed example, the land terminal apparatuses 111 and 117 do not determine whether or not the rated current is flowing, and instead, may continue to successively transmit the RLa reset signal. The reason of this is that the RLa reset signal is only discarded when the relay controlling circuit 205 is not operating.

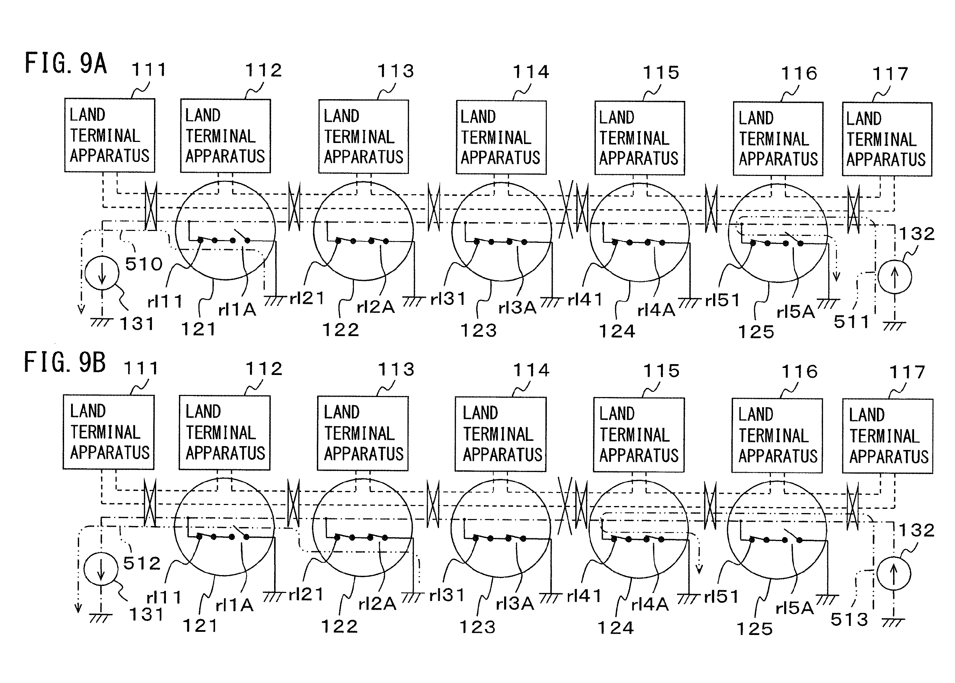

Resetting the latch relays RLa of the undersea branching devices 121 and 125 causes the contact points rl1A and rl5A to be opened. This state is illustrated in FIG. 9A. Opening the contact points rl1A and rl5A causes the power feeding path to be disconnected from the ground at the undersea branching devices 121 and 125. Accordingly, as illustrated in FIG. 9B, the power supply currents 512 and 513 flow into the undersea branching devices 122 and 124, respectively.

The power supply currents 512 and 513 cause the repeaters to operate, in the segment between the land terminal apparatus 111 and the undersea branching device 122, and in the segment between the land terminal apparatus 117 and the undersea branching device 124. As a result, between the land terminal apparatuses 111 and 113, and between the land terminal apparatuses 115 and 117, an optical signal is communicated. Further, the relay controlling circuits 205 of the undersea branching devices 122 and 124 are made to operate.

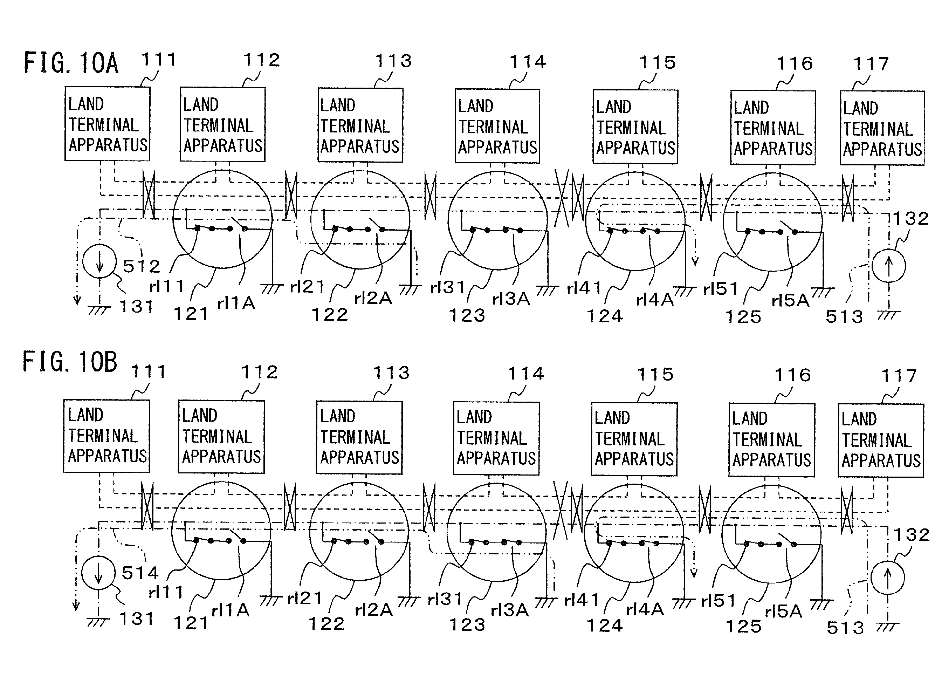

Next, the land terminal apparatus 111 determines whether or not the rated current is flowing in the undersea branching device 122. When the rated current is flowing in the undersea branching device 122, the land terminal apparatus 111 transmits the RLa reset signal to the undersea branching device 122. Resetting the latch relay RLa of the undersea branching device 122 causes the contact points rl2A to be opened. This state is illustrated in FIG. 10A. When the contact points rl2A are opened, the power supply currents 514 and 513 flow into the undersea branching devices 123 and 124, respectively, as illustrated in FIG. 10B.

The power supply current 514 causes the repeaters to operate, in the segment between the land terminal apparatus 111 and the undersea branching device 123. Thereby, between the land terminal apparatuses 111 and 114, an optical signal is communicated. As a result, communication becomes possible between the land terminal apparatuses 111 and 114, and between the land terminal apparatuses 115 and 117, except in the segment between the undersea branching devices 123 and 124 where the failure occurred.

According to the present embodiment, the latch relay RLa is provided and controls opening and closing of connection between the power feeding path and the ground, this connection being made via the contact points rl1 of the relay RL1. Thereby, it is possible to prevent the power feeding path from being grounded at the undersea branching device in the initial state of the submarine cable system 100.

According to the present embodiment, when the polarity is reversed to supply electric power at the time of restoring from a failure, resetting the latch relay RLa enables to prevent the power feeding path from being connected with the ground. This prevents the power feeding path from being connected to the ground at the undersea branching devices other than the undersea branching devices at the both ends of a failure occurrence segment so that power feeding is allowed to be spread over the segments other than the failure occurrence segment.

### <3. Third Embodiment>

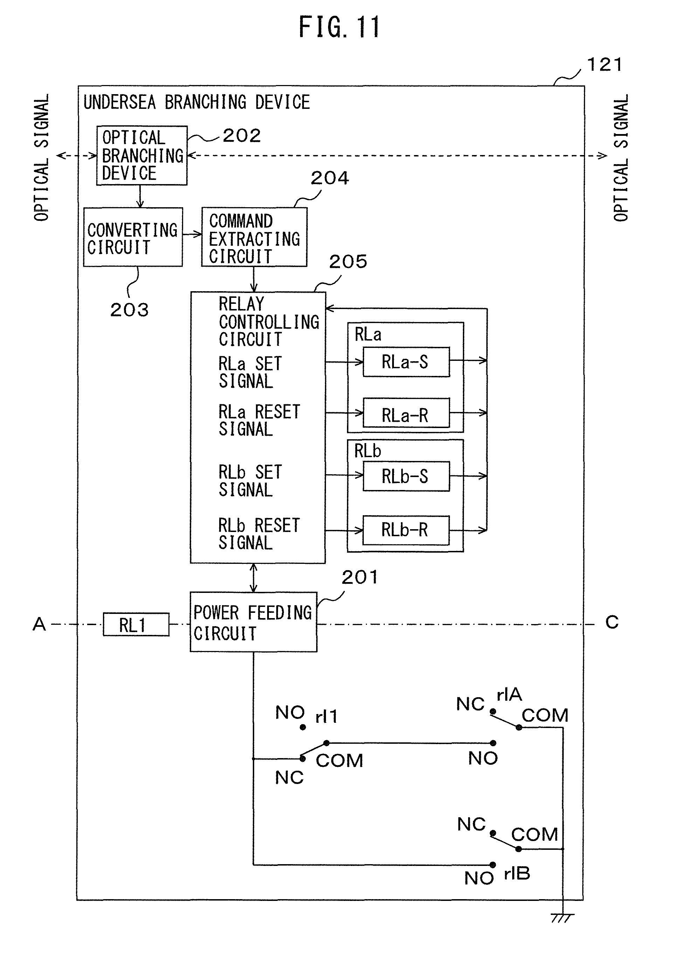

FIG. 11 illustrates a configuration of a third example of the undersea branching device 121. The same reference symbols as the reference symbols used in FIG. 5 are attached to the same constituting elements as the constituting elements illustrated in FIG. 5, and description about the same functions is omitted. The undersea branching device 121 includes a latch relay RLb.

The latch relay RLb controls opening and closing of connection between the power feeding path and the ground. The reference symbol rlB represents contact points of the latch relay RLb. When the latch relay RLb is set, the NO terminal is connected with the COM terminal. When the latch relay Rlb is reset, the NC terminal is connected with the COM terminal.

The contact points rlB control opening and closing of connection between both ends of a series-connected circuit of the contact points rl1 of the relay RL1 and the contact points rlA of the latch relay RLa. For this reason, the NO terminal of the contact points rlB is connected to the NC terminal of the contact points rl1, and the COM terminal of the contact points rlB is connected to the COM terminal of the contact points rlA.

Command signals extracted by the command extracting circuit 204 include an RLb set signal for setting the latch relay RLb, and an RLb reset signal for resetting the latch relay RLb. When the relay controlling circuit 205 receives the RLb set signal from the command extracting circuit 204, the relay controlling circuit 205 outputs a pulse signal to a relay coil RLb-S for setting the latch relay RLb, to set the latch relay RLb. When the relay controlling circuit 205 receives the RLb reset signal from the command extracting circuit 204, the relay controlling circuit 205 outputs a pulse signal to a relay coil RLb-R for resetting the latch relay RLb, to reset the latch relay RLb.

In an initial state of the submarine cable system 100, the latch relay RLb as well as the latch relay RLa are reset. In addition, in a normal operation state, the latch relay RLb is reset.

When a cable shunt failure occurs, one of the land terminal apparatuses 111 to 117 transmits the RLb set signal to the undersea branching devices that are among undersea branching devices 121 to 125, and that are positioned at the both ends of a location where a cable shunt failure is occurring. As a result, regardless of a state of the contact points rl1, the contact points R1B connect the power feeding path to the ground. Accordingly, the power feeding path is connected to the ground at the both ends of the failure occurrence location so that power feeding to the failure occurrence segment is stopped. For this reason, it is possible to perform failure restoring work safely.

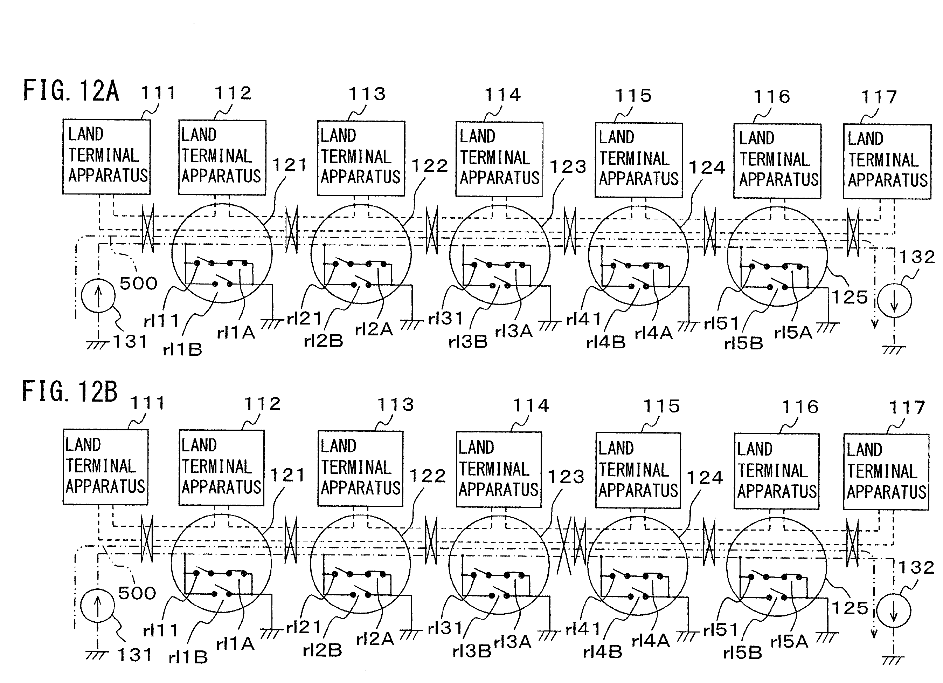

FIG. 12A, FIG. 12B, FIG. 13A, FIG. 13B, and FIG. 14 illustrate one example of operation of the undersea branching devices 121 to 125 in FIG. 11 at the time of failure occurrence. In FIG. 12A, FIG. 12B, FIG. 13A, FIG. 13B, and FIG. 14, the contact points rl11 to rl51 each indicate a connection state between the NC terminal and the COM terminal at the contact points rl1 of the corresponding one of the undersea branching devices 121 to 125. The contact points rl1A to rl5A each indicate a connection state between the NO terminal and the COM terminal at the contact points rlA of the corresponding one of the undersea branching devices 121 to 125. The contact points rl1B to rl5B each indicate a connection state between the NO terminal and the COM terminal at the contact points rlB of the corresponding one of the undersea branching devices 121 to 125.

FIG. 12A illustrates a normal operation state before a failure occurs. A power supply current 500 is flowing in the power feeding path in the segment between the land terminal apparatus 111 and 117. It is assumed that a cable shunt failure occurs between the undersea branching devices 123 and 124. This state is illustrated in FIG. 12B. Even when the cable shunt failure occurs, a trouble does not occur in the signal transmission since the power feeding path is grounded in the seawater, therefore, power feeding is continued by one-end power feeding.

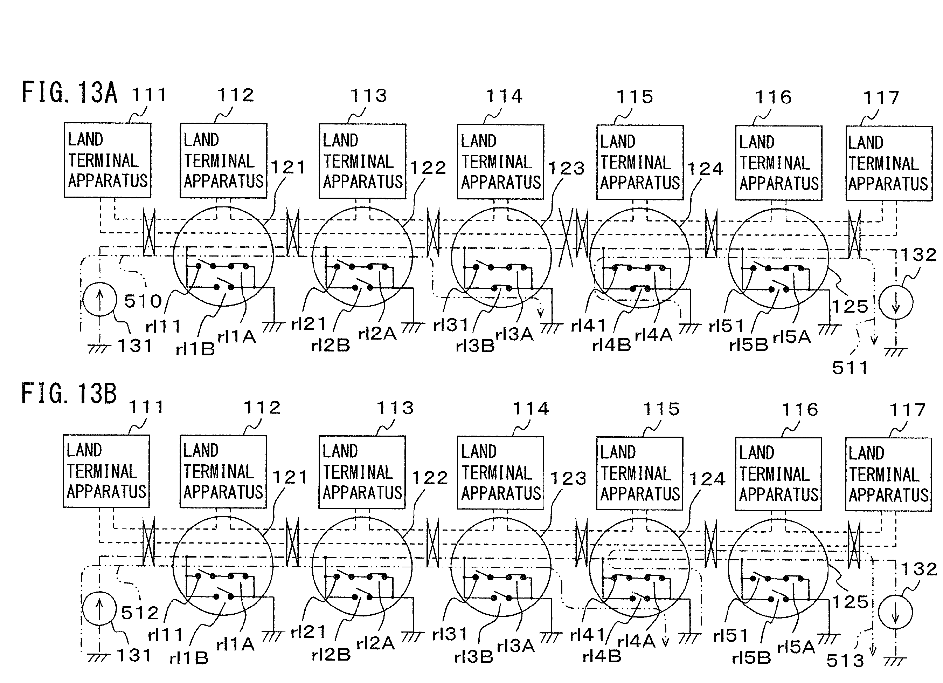

One of the land terminal apparatuses 111 to 117 transmits the RLb set signal to the undersea branching devices 123 and 124 at the both ends of the failure occurrence location. This state is illustrated in FIG. 13A. As a result of this, the contact points rl3B and rl4B are closed so that power feeding path is connected to the ground at the undersea branching devices 123 and 124. Accordingly, a power supply current 510 flows in the segment from the land terminal apparatus 111 to the undersea branching device 123, and a power supply current 511 flows in the segment from the land terminal apparatus 117 to the undersea branching device 124. In the segment between the undersea branching devices 123 and 124, power feeding is stopped.

The power supply current to the undersea branching device 124 from the side of the land terminal apparatus 111 is stopped. The relay RL1 of the undersea branching device 124 provided between the power feeding path on the side of the land terminal apparatus 111 and the power feeding circuit 201 is thereby made to be in an unexcited state. As a result, the contact points rl4 are closed.

FIG. 13B illustrates a state when failure restoring work is completed. One of the land terminal apparatuses 111 to 117 transmits the RLb reset signal to the undersea branching devices 123 and 124 at the both ends of the failure occurrence location. As a result of this, the contact points rl3B and rl4B are opened. The closed contact points rl41 and rl4A cause a power supply current 512 to flow from the power feeding device 131 to the ground point of the undersea branching device 124, and cause a power supply current 513 to flow from the ground point of the undersea branching device 124 to the power feeding device 132.

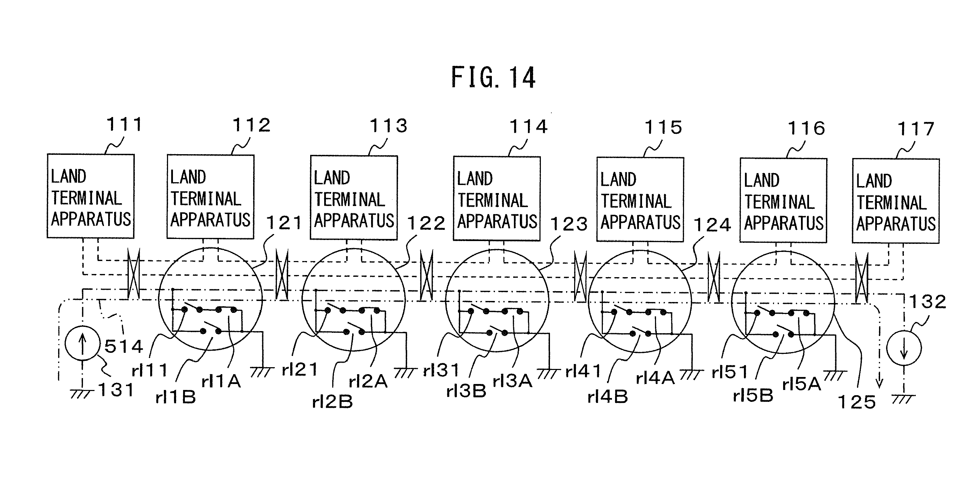

Flowing of the power supply current 512 from the side of the land terminal apparatus 111 to the undersea branching device 124 causes the relay RL1 of the undersea branching device 124 to be in an excited state. This state is illustrated in FIG. 14. The relay RL1 thus becomes excited so that the contact points rl41 are opened. As a result, the flow of the power supply currents 512 and 513 are cut. The power feeding path thus becomes unconnected to the ground at the undersea branching device 124 so that a power supply current 514 flows between the power feeding device 131 and the power feeding device 132. As a result, the normal operation state is recovered, where both-end power feeding is performed.

According to the present embodiment, at the time that a cable shunt failure occurs, power feeding to the failure segment is stopped regardless of whether the relay RL1 is excited or not. Accordingly, it is possible to perform failure restoring work safely.

### <4. Fourth Embodiment>

As described above referring to FIG. 13B and FIG. 14, in the third embodiment, when resetting the latch relay RLb associated with completion of restoring the cable shunt failure, the contact points rl41 of the relay RL1 are opened in a state where the power supply currents 512 and 513 are flowing though the contact points rl41. For this reason, for example, if values of the power supply currents 512 and 513 are larger than a rated opening-closing current value of the relay RL1, it is possible for the relay RL1 to be damaged.

In the fourth embodiment, when resetting the latch relay RLb associated with completion of restoring the cable shunt failure, opening of the contact points rl41 of the relay RL1 is avoided in a state where the power supply currents 512 and 513 are flowing though the contact points rl41.

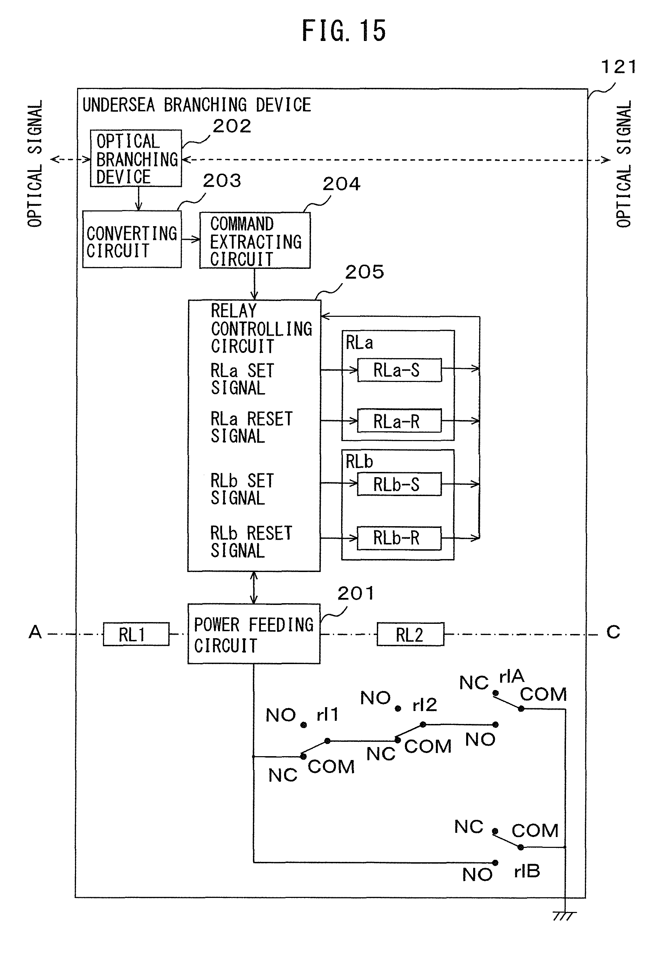

FIG. 15 illustrates a configuration of a fourth example of the undersea branching device 121. The same reference symbols as the reference symbols used in FIG. 11 are attached to the same constituting elements as the constituting elements illustrated in FIG. 11, and description about the same functions is omitted. The undersea branching device 121 includes a latch relay RL2.

The relay RL2 is an electric relay connected in series between the power feeding path on the side of the land terminal apparatus 117 and the power feeding circuit 201. The relay RL2 is provided between the contact points rlB of the latch relay RLb and the power feeding device 132 on the side of the land terminal apparatus 117. The relay RL1 is provided between the contact points rlB and the power feeding device 131 on the side of the land terminal apparatus 111.

Like the relay RL1, the relay RL2 is an electric relay that has a directional characteristic. In other words, when an electric current flows in the power feeding path in the direction of exciting the coil of the relay RL1, a coil of the relay RL2 is excited, and when an electric current flows in the direction opposite to the direction, the coil is not excited. In the present embodiment, like the relay RL1, when a power supply current flows from the path A to the path C in the drawing, the coil is excited. On the other hand, when a power supply current does not flow from the path A to the path C in the drawing, or when a power supply current flows in the path C to the path A in the drawing, the coil is not excited.

The symbol rl2 represents contact points of the relay RL2. When the coil of the relay RL2 is not excited, the NC terminal is connected with the COM terminal. When the coil of the relay RL2 is excited, the NO terminal is connected with the COM terminal. The NC terminal and the COM terminal of the contact points rl2 are connected in series to the NC terminal and the COM terminal of the contact points rl1 of the relay RL1, and are connected in series to the NO terminal and the COM terminal of the latch relay RLa. For example, the NC terminal of the relay RL2 is connected to the COM terminal of the relay RL1, and the COM terminal of the relay RL2 is connected to the NO terminal of the latch relay RLa.

At the time that the cable shunt failure occurs, the latch relay RLb is set. Thereby, a power supply current does not flow in the coil of the relay that is either the relay RL1 or RL2 and that is connected to the power feeding path positioned on the side of the failure occurrence segment. Accordingly, this coil becomes unexcited. On the other hand, a power supply current flows in the coil of the relay connected to the power feeding path on the side opposite to the failure occurrence segment since this electric current flows between the power feeding device and the ground that are connected by the contact points rlB of the latch relay RLb. Accordingly, this coil becomes excited.

As a result, series connection of the terminals rl1 of the relay RL1 and the terminals rl2 of the relay RL2 is not closed. Accordingly, a power supply current does not flow in these terminals. As a result, contrary to the third embodiment, it is possible to prevent the contact points rl1 and rl2 from being opened in a state where an electric current is flowing through these contact points, when the latch relay RLb is reset.

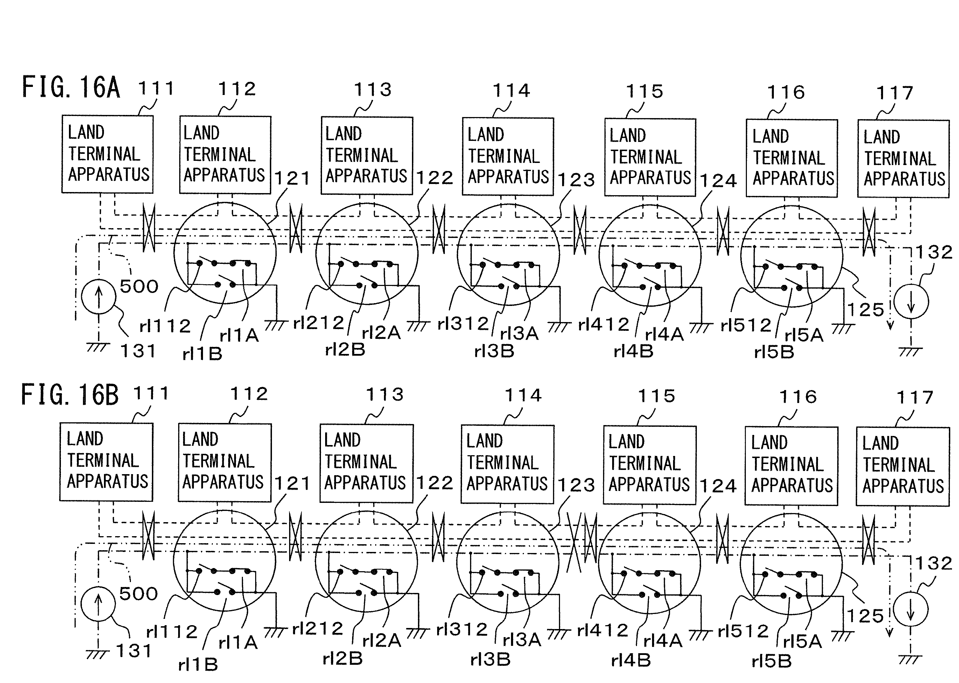

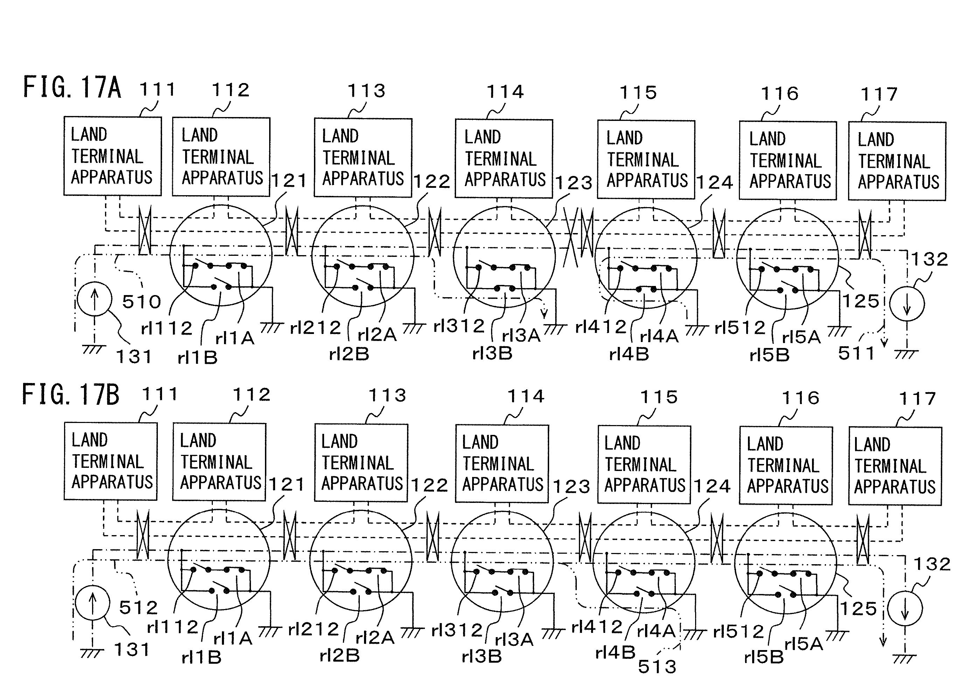

FIG. 16A, FIG. 16B, FIG. 17A, and FIG. 17B illustrate one example of operation of the undersea branching devices 121 to 125 in FIG. 15 when a failure occurs. In FIG. 16A, FIG. 16B, FIG. 17A, and FIG. 17B, the contact points rl112 to rl512 respectively indicate opening-closing states of series connection of the contact points rl1 and rl2 in the undersea branching devices 121 to 125. The contact points rl1A to rl5A respectively indicate connection states between the NO terminal and the COM terminal of the contact points rlA of the undersea branching devices 121 to 125. The contact points rl1B to rl5B respectively indicate connection states between the NO terminal and the COM terminal of the contact points rlB of the undersea branching devices 121 to 125.

FIG. 16A illustrates a normal operation state before a failure occurs. A power supply current 500 is flowing in the power feeding path in the segment between the land terminal apparatuses 111 and 117. It is assumed that a cable shunt failure occurs between the undersea branching devices 123 and 124. This state is illustrated in FIG. 16B.

One of the land terminal apparatuses 111 to 117 transmits the RLb set signal to the undersea branching devices 123 and 124 at the both ends of the failure occurrence location. This state is illustrated in FIG. 17A. As a result, the contact points rl3B and rl4B are closed so that the power feeding path is connected to the ground at the undersea branching devices 123 and 124. Accordingly, a power supply current 510 flows in the segment from the land terminal apparatus 111 to the undersea branching device 123, and a power supply current 511 flows in the segment from the land terminal apparatus 117 to the undersea branching device 124. Power feeding is stopped in the segment between the undersea branching devices 123 and 124.

Since the power supply current to the undersea branching devices 124 from the side of the land terminal apparatus 111 is stopped, the relay RL1 of the undersea branching device 124 becomes unexcited. On the other hand, the relay RL2 becomes excited since the power supply current 511 from the side of the land terminal apparatus 117 flows. For this reason, the contact points rl412 are maintained to be open. As a result, a power supply current does not flow through the contact points rl412.

FIG. 17B illustrates a state at the time of completion of failure restoring work. One of the land terminal apparatuses 111 to 117 transmits the RLb reset signal to the undersea branching devices 123 and 124 at the both ends of the failure occurrence location. As a result, the contact points rl3B and rl4B are opened. A power supply current 512 flows between the power feeding device 131 and the power feeding device 132. Thereby, the normal operation state is recovered, where both-end power feeding is performed.

According to the present embodiment, when resetting the latch relay RLb associated with completion of restoring a cable shunt failure, the contact points of the relay RL1 or RL2 are prevented from being opened in a state where an electric current is flowing through this relay. Accordingly, it is possible to reduce a possibility of having damage at the time of opening the contact points through which an electric current is flowing.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A power feeding path switching device comprising:
a relay configured to become excited when a power supply current flows across the relay in a first direction of a power feeding path, and to become unexcited when a power supply current flows across the relay in a second direction opposite to the first direction, or when a power supply current does not flow across the relay, wherein
the relay in an unexcited state connects the power feeding path with ground, and the relay in an excited state does not connect the power feeding path with ground.

2. The power feeding path switching device as claimed in claim 1, the power feeding path switching device further comprising:
a latch relay configured to enable to open a connection between the power feeding path and ground regardless of whether the relay is excited or not.

3. The power feeding path switching device as claimed in claim 1, the power feeding path switching device further comprising:
a latch relay configured to enable to connect the power feeding path with ground regardless of whether the relay is excited or not.

4. The power feeding path switching device as claimed in claim 2 or 3, the power feeding path switching device further comprising:
a receiver configured to receive a control signal for controlling the latch relay; and
a relay controlling circuit configured to control the latch relay in accordance with the control signal.

5. The power feeding path switching device as claimed in claim 3, wherein
the relay is a first relay,
the power feeding path switching device further comprises:
a second relay configured to become excited when a power supply current flows across the second relay in the first direction, and to become unexcited when a power supply current flows across the second relay in the second direction, or when a power supply current does not flow across the second relay,
an electric power is supplied to the power feeding path by both-end power feeding,
a relay coil of the first relay is provided between contact points of the latch relay and one end out of both ends of the power feeding path,
a relay coil of the second relay is provided between contact points of the latch relay and the other end out of both ends of the power feeding path, and
when the first relay and the second relay are unexcited, the first relay and the second relay connect the power feeding path with ground, and when either of the first relay and the second relay is excited, the first relay and the second relay do not connect the power feeding path with ground.

6. A power feeding system comprising:
a power feeding path;
a power feeding device configured to supply electric power to the power feeding path by both-end power feeding; and
a power feeding path switching device arranged in the power feeding path, wherein
the power feeding path switching device includes:
a relay configured to become excited when a power supply current flows across the relay in a first direction of a power feeding path, and to become unexcited when a power supply current flows across the relay in a second direction opposite to the first direction, or when a power supply current does not flow across the relay, and
the relay in an unexcited state connects the power feeding path with ground, and the relay in an excited state does not connect the power feeding path with ground.

7. The power feeding system as claimed in claim 6, wherein the power feeding device causes a power supply current to flow in the second direction.

8. The power feeding system as claimed in claim 7, wherein a plurality of the power feeding path switching devices are arranged in series in the power feeding path, wherein each of the power feeding path switching devices further includes:
a latch relay configured to enable to open connection between the power feeding path and ground regardless of whether the relay is excited or not;
a receiver configured to receive a control signal for controlling the latch relay; and
a relay controlling circuit configured to control the latch relay in accordance with the control signal,
wherein
the power feeding system comprises:
a signal transmitting device configured to transmit the control signal to a plurality of the power feeding path switching devices, and
the signal transmitting device transmits the control signal for opening connection between the power feeding path and ground, to the plurality of the power feeding path switching devices, in the order of the power feeding path switching device thereof that is nearest from the power feeding device to receive the signal first.

9. The power feeding system as claimed in claim 8, wherein the signal transmitting device determines whether the power feeding path switching device receives a rated current or not, and transmits the control signal to the power feeding path switching device after the power feeding path switching device comes to receive the rated current.

10. The power feeding system as claimed in claim 9, wherein the signal transmitting device determines a timing of transmitting the control signal in accordance with an electric potential difference between the power feeding path at the power feeding device and ground.
